# EUROPÄISCHE PATENTSCHRIFT

(11) **EP 2 899 521 B1**
(45) Veröffentlichungstag und Bekanntmachung des Hinweises auf die Patenterteilung: **30.08.2017**
(21) Anmeldenummer: 15152552.4
(22) Anmeldetag: 26.01.2015
(51) Int. Cl.: G01L 1/14

(54) **Volumenkompressible kapazitive flächige flexible Sensormatte zur Messung von Druck oder Druckverteilungen und/oder zur Messung oder Detektion von Deformationen**
Volume-compressible capacitive flat flexible sensor mat for measuring pressure or pressure distributions and/or for measuring or detecting deformations
Tapis de capteurs à volume compressible, capacitif, plat, flexible pour la mesure de pression ou de répartitions de pression et/ou pour la mesure ou la détection de déformations

(30) Priorität: 27.01.2014 DE 102014201434
(43) Veröffentlichungstag der Anmeldung: 29.07.2015
(73) Patentinhaber: Fraunhofer-Gesellschaft zur Förderung der angewandten Forschung e.V., 80686 München (DE)
(72) Erfinder: Böse, Holger, 97080 Würzburg (DE); Hassel, Till, 97082 Würzburg (DE)
(74) Vertreter: Strehl Schübel-Hopf & Partner

(56) Entgegenhaltungen:
- EP-A2- 2 154 503
- DE-A1- 3 841 243
- DE-A1-102007 022 872
- DE-A1-102009 055 121
- US-A1- 2010 282 000

## Beschreibung

Die Erfindung betrifft eine volumenkompressible kapazitive flächige flexible Sensormatte zur Messung von Druck oder Druckverteilungen und/oder zur Messung oder Detektion von Deformationen auf flexiblen flächigen Unterlagen, welche Sensormatte mindestens zwei Elektroden aufweist, zwischen denen die elektrische Kapazität gemessen werden kann, und dergestalt ausgebildet ist, dass bei einer Druckbelastung der Sensormatte sich die elektrische Kapazität messbar - und bei Bedarf auch ortsaufgelöst - erhöht.

Der Begriff "flächig" deutet im Rahmen der vorliegenden Erfindung allein auf die zweidimensionale Ausdehnung der Sensormatte hin, sodass die Sensormatte über zwei äußere Flächenseiten/Oberflächen verfügt, auf mindestens einer von welchen die Sensormatte dem zu messenden/detektierenden Druck oder der zu messenden/detektierenden Deformation ausgesetzt werden kann. Der Begriff "flächig" soll jedoch nicht als einschränkend auf eine ebene geometrische Form dieser Flächenseite oder auf eine flache/dünne Ausgestaltung der Sensormatte verstanden werden, wenngleich solche Ausführungsformen auch mitumfasst sind. Das Gleiche gilt auch für Elemente der Sensormatte, die im Folgenden als "flächig" bezeichnet werden.

Gegenüber bekannten Druck- und Deformationssensoren richtet sich die vorliegende Erfindung auf eine Verbesserung der Sensorempfindlichkeit für geringfügige Druck- oder Deformationsänderungen bei einer von der Herstellung her einfachen und günstigen, aber zugleich hinsichtlich der Anpassungsfähigkeit an die Erfordernisse der jeweiligen Anwendung - wie etwa an eine erforderliche Ortsauflösung - leistungsfähigeren Konstruktion des Sensors.

In vielen verschiedenen Situationen ist es beispielsweise erforderlich, auf einer flexiblen, d. h. nachgiebigen/verformbaren, flächigen Unterlage die von einem aufliegenden Körper auf die Unterlage ausgeübte Druckverteilung zu messen. Dies ist in solchen Anwendungen besonders relevant, bei denen der Druck auf die Unterlage durch das Gewicht einer Person erzeugt wird.

Ein Beispiel mit großer technischer Bedeutung ist die Sensorik in einem Autositz, mit der die Druckverteilung der darauf sitzenden Person registriert wird. Damit kann nicht nur die Belegung des Sitzes erkannt, sondern auch das Gewicht der Person ermittelt und zusätzlich die Verteilung ihres Gewichtes auf der Sitzfläche erfasst werden. Die Kenntnis dieser Daten kann bei einem Unfall eine erhebliche Bedeutung für die Ansteuerung eines Airbags haben. Durch eine auf die Größe, das Gewicht und/oder die aktuelle Sitzposition abgestimmte Auslösung des Airbags kann z. B. zwischen einem Kind und einem Erwachsenen unterschieden werden und Verletzungen können unter Umständen vermieden oder verringert werden.

Ein weiterer wichtiger Anwendungsfall für ein solches Sensorsystem zur Messung einer flächigen Druckverteilung ist die Auflage einer bewegungsunfähigen Person in einem Bett. Hier ist es erforderlich, Stellen mit hoher Druckbelastung des Körpers zu erkennen und gezielt zu entlasten, da andernfalls schwer heilende Wunden entstehen können (Dekubitus). Eine ähnliche Situation ergibt sich für einen Querschnittsgelähmten auf der Sitzfläche seines Rollstuhls. Weiterhin ist es beispielsweise für Diabetes-Patienten sehr wichtig, beim Stehen die Druckverteilung des Fußes im Schuh zu erfassen, da auch hier schwere Schäden bis hin zur Erfordernis einer Amputation entstehen können.

Für die Messung eines mechanischen Druckes stehen eine große Auswahl von Messmethoden und entsprechende Sensoren zur Verfügung. Wenn jedoch die Druckverteilung auf einer großen Fläche erfasst werden soll, ist dies mit einem hohen Aufwand verbunden, denn dafür muss eine Vielzahl von Sensoren eingesetzt werden. Noch schwieriger zu realisieren ist die Druckmessung auf einer flexiblen, d. h. nachgiebigen/verformbaren, Unterlage, weil die Sensoranordnung der Verformung der Unterlage folgen und sich dabei in der Regel in gewissen Grenzen auch lateral dehnen muss.

Druck- und Deformationssensoren sind aus dem Stand der Technik bekannt. So offenbart US 2010/0033196 A1 einen kapazitiven Sensor mit einer dielektrischen Elastomerschicht und benachbarten Elektrodenschichten. Die dielektrische Elastomerschicht kann als Schaumkörper ausgebildet sein. DE OS 24 48 298 beschreibt eine Wägematte mit einer Trägerplatte, auf der drei flexible leitfähige Schichten angeordnet sind, die durch dielektrische, elastomer federnde, profilierte Schichten voneinander getrennt sind. Die Profilseiten dieser Schichten weisen zur mittleren der leitfähigen Schichten und können aus Rippen oder Vorsprüngen bestehen, wobei die Rippen rechtwinklig zueinander angeordnet sind und die Profilierung so gestaltet ist, dass die Belastungstragfähigkeit innerhalb bestimmter Grenzen linear und eine gute Widerstandsfähigkeit gegen Scherungen in zumindest einer Richtung gegeben ist. In DE 38 41 243 A1 ist eine Messplattform mit einer unteren ebenen, leitende Platte und einem auf dieser Platte aufliegenden Dielektrikum gezeigt. Die Oberseite der Messplattform besitzt sich in Richtung auf das Dielektrikum verjüngende Vorsprünge, die an ihrer Oberseite elektrisch leitend ausgebildet sind und sich bei Krafteinwirkung elastisch verformen, wobei sich die auf dem Dielektrikum aufliegende Fläche vergrößert, was zu einer Kapazitätserhöhung führt.

Bisher stehen nur wenige Sensorsysteme zur Verfügung, mit denen Druckverteilungen auf flexiblen Unterlagen prinzipiell gemessen werden können, z. B. auf der Messung der Leitfähigkeit basierende Systeme. Diese sind jedoch technisch äußerst aufwendig, dementsprechend kostspielig und können daher das breite Feld der alltäglichen Anwendungen, von welchem in den obigen Beispielen nur ein Teil aufgezeigt wurde, nicht oder nur sehr eingeschränkt bedienen.

In einem Beitrag auf IEEE Sensors 2010 Conference stellten Riedl et al. einen kapazitiven Drucksensor für Anwendungen in der Luftfahrt vor, der zu einer flächigen Erfassung von Druckverteilungen auf einer unebenen Oberfläche, z. B. auf einer Tragfläche eines Flugzeugmodells, geeignet ist. Dieser kapazitive Drucksensor besteht aus einer dünnen Polydimethylsiloxan-Schicht mit einer Aluminiumbeschichtung auf deren Rückseite und Erhöhungen auf deren Vorderseite, wobei die Erhöhungen auf einem mit Kupfer beschichteten dünnen Polyimid-Substrat aufliegen. Die mit Erhöhungen strukturierte PDMS-Schicht wirkt als Dielektrikum mit einer geringen Federkonstanten zwischen zwei Elektroden. Dank der zumindest einmaligen Biegsamkeit des Polyimid-Substrats wird die Verwendung des Sensors auf gekrümmten starren Oberflächen ermöglicht, nicht jedoch auf nachgiebigen Unterlagen.

In einer Veröffentlichung von Böse et al. im Konferenzband "Sensoren und Messsysteme" 2010 zur 15. ITG/GMA Fachtagung am 18. und 19. Juni 2010 in Nürnberg wurde ein Kraftsensor beschrieben, bei dem eine beidseitig mit Elektroden beschichtete Elastomerfolie zwischen gewellten Oberflächen zweier starrer Stempel definiert verformt wird. Werden die Stempel aufeinander gedrückt, so wird die Elastomerfolie zwischen den gewellten Oberflächen der Stempel gedehnt, wodurch die elektrische Kapazität des durch die Elektroden gebildeten Kondensators steigt. Bei der Bewegung der Stempel zueinander werden diese durch Stifte senkrecht zur ungedehnten Folienoberfläche geführt, damit die Folie mit einer definierten Kraft belastet wird. Eine Druckmessung auf nachgiebigen Unterlagen, insbesondere eine Auflösung nach dem Ort, ist mit diesem starren Aufbau jedoch nicht möglich.

Neben Sensoren zur verbesserten Messung bzw. Detektion von Druck oder Druck- und/oder Deformationsverteilungen auf flexiblen flächigen Unterlagen richtet sich die vorliegende Erfindung auch auf flächige Sensoren zur Erfassung oder Messung von Druck oder Druckverteilungen eines fluiden Mediums an einer Oberfläche. Als fluide Medien sind hier Gase und Flüssigkeiten, aber auch disperse Feststoffe wie rieselfähige Materialien und Pulver zu verstehen. Als Beispiel für die großflächige Messung der Luftdruckverteilung an einer Oberfläche wird die Luftströmung an Flugzeugtragflächen genannt. Auf diese Weise können Strömungsabrisse erkannt werden. Ein Beispiel für einen Drucksensor für Flüssigkeiten bildet ein Füllstandssensor, der etwa die Flüssigkeitsmenge in einem Behälter ermittelt. Schließlich möchte man bei der Verarbeitung von Pulvern mitunter wissen, welchen Druck eine Pulvermischung auf die Unterlage ausübt, denn dieser Druck ergibt sich aufgrund von Wechselwirkungskräften zwischen den Pulverpartikeln nicht einfach aus dem Gewicht des auf der Unterlage aufliegenden Pulvers.

Für die Druckmessung von fluiden Medien gibt es Sensoren, die mit verschiedenen Messprinzipien arbeiten. Zu nennen sind Dehnmessstreifen und auch kapazitive Sensoren, die verformbare Metallmembranen als Elektroden enthalten. Piezoelektrische Drucksensoren können keine statischen, sondern nur dynamische Drucksignale messen. Die bestehenden Drucksensoren eignen sich eher zur Messung auf kleinen Flächen. Zudem handelt es sich nicht um sehr kostengünstige Lösungen.

Die eingangs genannte Aufgabe der Erfindung wird durch eine volumenkompressible, kapazitive, flächige, flexible Sensormatte nach Anspruch 1 gelöst,
Kapazitätsänderungen bis über 100 % sind dabei möglich. Diese Kapazitätserhöhung kann mit einem einfachen Messverfahren in einer dem Fachmann bekannten Weise erfasst werden.

Die erfindungsgemäße flächige flexible volumenkompressible Sensormatte (im Folgende auch kurz als Matte bezeichnet) stellt daher einen Kondensator oder - bei mehreren Elektrodenpaaren - ein System von mehreren Kondensatoren dar, dessen/deren Kapazität (ggf. jeweils) von der Fläche der Elektroden und von deren Abstand zueinander abhängt. Durch die in der Matte vorgesehenen Hohlräume wird diese volumenkompressibel und kann daher relativ leicht zusammengedrückt werden. Durch das Verformen/Zusammendrücken der erfindungsgemäßen Sensormatte in Richtung senkrecht zu der/den Elastomerschichten wird der Abstand zwischen den Elektroden - ggf. lokal - verringert und je nach Elektrodengeometrie in spezifischen Ausgestaltungen ggf. zugleich auch deren Fläche vergrößert, was zu einem erfindungsgemäß deutlichen Anstieg der zwischen den Elektroden - ggf. lokal bzw. ortsaufgelöst - gemessenen Kapazität führt.

Der oder die Hohlräume sind in einem einfachen Fall gasgefüllt, z. B. mit Luft oder einem inerten Gas. Wenn die Sensormatte zusammengedrückt wird, kann das Gas - je nach Ausführungsform - aus den (nach außen offenen) Hohlräumen seitlich aus der Matte an ihren Stirnseiten entweichen oder aber in (nach außen geschlossenen) Hohlräumen verbleiben und dem Druck durch die hohe Kompressibilität des Gases nachgeben. Es sind auch Kombinationen dieser beiden Möglichkeiten in einer Matte möglich. In spezifischen Ausführungsformen können sich darüber hinaus auch nicht gasförmige Stoffe in den Hohlräumen befinden oder diese ausfüllen, wie z. B. komprimierbare Feststoffe, wie etwa Schaumstoffe, oder zum Entweichen aus der Matte geeignete Stoffe, wie etwa Flüssigkeiten. Dabei hängt die Kompressibilität von der Härte des verwendeten Elastomers sowie vom Volumenverhältnis der Hohlräume und des Elastomermaterials ab.

Vorteile der erfindungsgemäßen Sensormatte im Hinblick auf die Empfindlichkeit einer Druck- bzw. Deformationsmessung und auf den zugänglichen Messbereich werden zunächst einmal aus dem Vergleich mit dielektrischen Elastomerfolien deutlich, welche bereits bekannt sind. Eine dielektrische Elastomerfolie besteht aus einer stark dehnbaren Elastomerfolie, die beidseitig mit ebenfalls stark dehnbaren Elektroden beschichtet ist. Die Elektroden behalten auch bei einer hohen Dehnung eine ausreichende elektrische Leitfähigkeit bei. Eine solche dielektrische Elastomerfolie hat damit die Form eines Kondensators, dessen Kapazität von der Fläche der Elektroden und der Dicke der dazwischen liegenden Elastomerfolie abhängt. Wird die dielektrische Elastomerfolie gedehnt, so vergrößert sich die Elektrodenfläche und verringert sich zugleich der Elektrodenabstand. Beides führt zu einer Kapazitätserhöhung. Damit wirkt die dielektrische Elastomerfolie wie ein kapazitiver Dehnungssensor.

Bei der Auflage einer dielektrischen Elastomerfolie auf einer nachgiebigen Unterlage, wie z. B. einem Sitz, ist die sich bei einer Druckbelastung einstellende Dehnung der Folie jedoch äußerst gering und damit die Empfindlichkeit einer Kapazitätsmessung kaum ausreichend. Das hängt damit zusammen, dass die dielektrische Elastomerfolie weitgehend volumeninkompressibel ist. Beim Zusammendrücken der Folie weicht das Elastomermaterial zur Seite aus, wodurch sich die Folienfläche vergrößert. Dies ist allerdings mit einem hohen mechanischen Widerstand verbunden, d. h. der Sensor reagiert auf mechanischen Druck auf die Folie nur äußerst unempfindlich.

Bei einer erfindungsgemäßen Sensormatte für nachgiebige Unterlagen dienen demgegenüber die zusammendrückbaren Hohlräume dazu, dass die Verringerung des Elektrodenabstands eines Elektrodenpaares und damit die erfassbare Kapazitätsänderung bei einer geringen Druckbelastung der Matte - wie z. B. bei einer lokalen Druckerhöhung oder einer lokalen Deformation wie Stauchung - erheblich höher ausfällt.

Ferner ist bei der Sensormatte nach der Erfindung der Elektrodenabstand im unbelasteten Zustand der Matte und damit der zugängliche Messbereich und die Messempfindlichkeit in den meisten Ausgestaltungen nicht unmittelbar durch die Dicke des wegen der Hohlräume volumen kompressiblen Elastomermaterials vorgegeben, im Unterschied etwa zu dem aus der obigen Veröffentlichung von Riedl et al. bekannten kapazitiven Drucksensor, der ebenfalls Hohlräume zwischen den Erhöhungen der dielektrischen Schicht aufweist. Vielmehr ist bei der erfindungsgemäßen Sensormatte der Abstand der Messelektroden im entlasteten Zustand der Matte - ggf. lokal - deutlich kleiner als die Gesamtdicke der Sensormatte/Elastomermatte und kann - je nach Ausführungsform - z. B. nur einen Bruchteil der Mattendicke betragen. Die erfindungsgemäße Konstruktion bleibt jedoch ganz ohne Einbuße bei den elastischen Eigenschaften (Elastizitätsmodul, ggf. laterale Dehnbarkeit etc.) der Matte, weil nach der Erfindung mindestens eine der Messelektroden - zumindest zum Teil - selbst als eine mit Erhöhungen/Hohlräumen versehene und dadurch volumenkompressible Elastomerschicht ausgestaltet und bei einer Druckbelastung des Sensors zu einem erheblichen Teil an seiner Komprimierbarkeit beteiligt ist. Daraus resultiert unter anderem eine vorteilhafte Entkopplung/Freiheit bei der Einstellung/Wahl von elektrischen einerseits und mechanischen andererseits Eigenschaften der Sensormatte. Mit anderen Worten kann eine diese Eigenschaften betreffende Anpassung des erfindungsgemäßen Sensors an die jeweilige Anwendung in einem sehr breiten Intervall durch eine einfache Geometrieänderung (etwa Dicke, oder Profilform) bei den elektrisch leitenden und/oder isolierenden Elastomerschichten erfolgen, d. h. ohne eine grundsätzliche Änderung der Sensorkonstruktion und damit äußerst kostengünstig und flexibel.

Die mindestens zwei Elektroden bzw. Elektrodenschichten können sich in einer erfindungsgemäßen flächigen Sensormatte in einem einfachen Fall jeweils über die gesamte Fläche der Matte bzw. einer Elastomerschicht erstrecken. Es können jedoch Elektroden/Elektrodenschichten eingesetzt werden, die sich nur über eine bestimmte Teilfläche der Sensormatte erstrecken. Ferner kann es sich bei einer Elektrodenschicht um eine lateral strukturierte Elektrodenschicht mit mehreren in verschiedenen Flächensegmenten der Matte angeordneten und voneinander elektrisch unabhängigen oder elektrisch miteinander verbundenen/gekoppelten Elektroden zum Zwecke einer ortsaufgelösten Druck- bzw. Deformationsmessung mittels dementsprechend mehrerer über die Gesamtfläche der Matte verteilter Elektrodenpaare handeln. So können Elektrodenarrays auf den Erhöhungen/Vorsprüngen des Profils der ersten Elastomerschicht angeordnet sein, die beispielsweise reihenweise durch dem Profil der Schicht folgende, elektrisch leitende Streifen miteinander verbunden sind oder sogar einzeln elektrisch angesteuert werden können. Genauere Beispiele für diese verschiedenen Möglichkeiten folgen weiter unten. Bei der Beschreibung spezifischer Ausgestaltungen wird im Folgenden der Einfachheit halber meist von "Elektroden/Elektrodenschichten" die Rede sein, die eine Elastomerschicht "bedecken", sich entlang dieser "erstrecken", diese "ausfüllen" etc.. Dabei soll in allen Fällen neben einer vollständigen "Bedeckung", "Beschichtung", "Ausfüllung" etc. der jeweiligen Fläche/Schicht mit einer durchgehenden leitfähigen Elektrodenschicht/Elektrode stets in erster Linie eine teilweise, z. B. lokale, Bedeckung, Beschichtung, Ausfüllung etc. dieser Fläche/Schicht mit der Elektrode bzw. eine Bedeckung/Beschichtung/Ausfüllung mit einer wie angegeben lateral strukturierten Elektrode als möglich und als für die Erfindung besonders wichtig verstanden werden, ohne dass jedes Mal explizit darauf hingewiesen wird. Geeignete Materialien, chemische Elemente und Verbindungen sind weiter unten angegeben.

Insbesondere soll der Begriff "vollständig elektrisch leitfähig" eine laterale Strukturierung der durch die jeweilige Elastomerschicht gebildeten Elektrode zur Ausbildung von in der Sensormattenfläche elektrisch voneinander unabhängigen Elektroden nicht ausschließen. Vielmehr bezieht sich der Begriff "vollständig" in erster Linie auf die Dicke der betreffenden Elastomerschicht. Die elektrische Leitfähigkeit kann beispielsweise durch das Ausfüllen der Elastomermatrix mit leitfähigen Partikeln mit einer Partikeldichte oberhalb der Perkolationsschwelle hergestellt werden. Geeignete Materialien, chemische Elemente und Verbindungen werden weiter unten angegeben.

Eine erfindungsgemäße Messelektrode, die eine vollständig elektrisch leitfähige volumenkompressible Elastomerschicht mit in Hohlräume ragenden Erhöhungen darstellt oder umfasst, sollte ferner über eine für die Funktion der Sensormatte ausreichende Verformbarkeit (je nach Anwendung ggf. auch laterale Dehnbarkeit, siehe unten) ganz ohne Nachteil für die elektrische Leitfähigkeit verfügen. Dies kann z. B. mit einer entsprechend weit über der Perkolationsschwelle liegenden Dichte der elektrisch leitfähigen Partikel erreicht werden. Das Gleiche gilt entsprechend auch für die Ausführungsformen bei denen ein unebenes Profil einer dielektrischen Elastomerschicht mit einer Elektrode bedeckt ist.

Bei einer Sensormatte nach der Erfindung wird in der einen oder den mehreren Elastomerschichten vorzugsweise überall ein und dasselbe Elastomermaterial verwendet. Dies ist von Vorteil zum einen wegen der Einfachheit der Herstellung, zum anderen wegen der identischen Eigenschaften, wie z. B. des Elastizitätsmoduls, der Temperaturabhängigkeit, der Materialalterung etc., von aus einem und demselben Elastomermaterial gefertigten Teilen des Sensors. Es können aber bei Bedarf auch zwei oder mehr verschiedene Elastomermaterialien innerhalb einer Elastomerschicht oder für jeweils verschiedene Elastomerschichten in einer Sensormatte kombiniert werden. Ebenfalls können in einer erfindungsgemäßen Sensormatte unterschiedlich stark vernetzte Elastomermaterialien verwendet werden, d. h. das gleiche Elastomermaterial, welches unterschiedlich stark vernetzt wird und dadurch Bereiche oder Elemente mit unterschiedlicher Härte im Sensor ausbildet. Wenn in der nachfolgenden Beschreibung der Kürze wegen die Rede von "dem/einem Elastomer(material)" ist, sollen stets auch Kombinationen mehrerer unterschiedlicher Elastomermaterialien (bzw. mit unterschiedlichen Vernetzungsgraden/Härten) als mitumfasst verstanden werden. Geeignete Materialien und chemische Verbindungen sind weiter unten angegeben.

Zur Lösung der eingangs genannten Aufgabe und zur Erzielung der teilweise oben und mit weiteren Einzelheiten auch nachfolgend angegebenen technischen Wirkungen schlägt die Erfindung einen Lösungsansatz für die Ausgestaltung der Sensormatte vor, nämlich Variante a). Variante b) dient nur als Referenz.Beide Varianten werden im Folgenden ausführlicher erläutert.

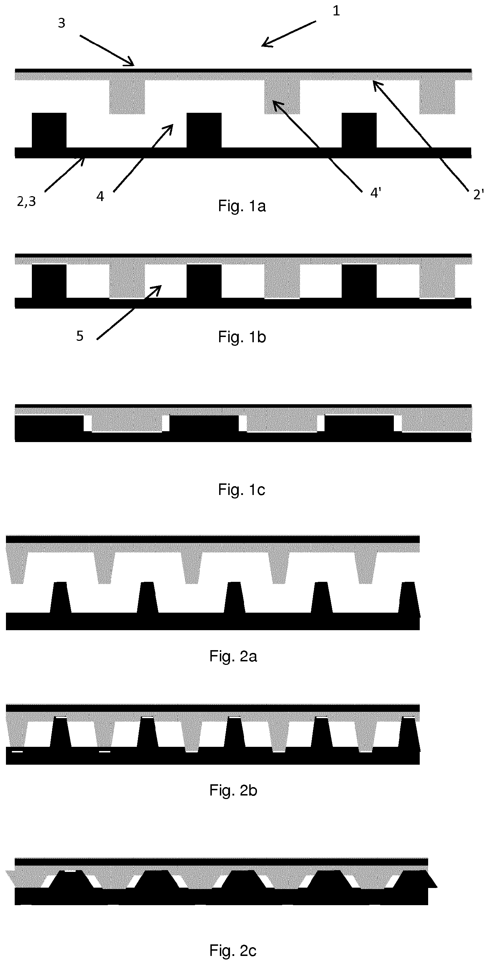

Bei der Variante a) weist die Sensormatte zwei flächige Elastomerschichten auf, die in Richtung aus der Fläche der Matte übereinander angeordnet sind. Eine erste dieser Elastomerschichten weist auf derjenigen ihrer beiden Oberflächen, die der zweiten Elastomerschicht zugewandt ist, ein unebenes Profil mit Erhöhungen/Vorsprüngen und/oder Vertiefungen auf. Diese erste Elastomerschicht ist im obigen Sinne vollständig elektrisch leitfähig oder auf der Profilseite mit einer leitfähigen und ggf. strukturierten Schicht beschichtet und bildet damit eine der beiden Elektroden. Die zweite Elastomerschicht weist auf derjenigen ihrer beiden Oberflächen, die der ersten Elastomerschicht zugewandt ist, ein ebenfalls unebenes Profil auf, während ihre andere Oberfläche oder ein Teil davon mit einer -ebenfalls dehnbaren und ggf. strukturierten - elektrisch leitfähigen Elektrodenschicht bedeckt ist, die die - ggf. jeweilige - zweite Messelektrode bildet. Das genannte unebene Profil der zweiten Elastomerschicht ist zum Profil der ersten Elastomerschicht teilweise komplementär, d. h. beim Übereinanderlegen der beiden Profile zur Herstellung der Sensormatte greifen die Erhöhungen und Vertiefungen der beiden Elastomerschichten ineinander, wie es z.B. in den Fig. 1b und 2b dargestellt ist, sodass dabei in einem nicht komprimierten Zustand der fertigen Sensormatte zwischen den Profilerhöhungen/Vertiefungen der ersten Elastomerschicht bzw. gegebenenfalls zwischen den beiden Profilen der zwei Elastomerschichten ein Hohlraumvolumen bleibt, das frei von Elastomermaterial ist. Zwischen den beiden Elastomerschichten befindet sich in der Regel keine Zwischenschicht. In einem solchen entlasteten Zustand der Sensormatte liegen die beiden Elastomerschichten daher in der Regel teilweise aneinander an, z. B. im Bereich von Spitzen einiger oder aller Erhöhungen (vgl. Fig. 1b und 2b). Aufgrund der erfindungsgemäßen Ausgestaltung ist dabei zumindest ein Teil der als elastische Abstandshalter zwischen den beiden Elastomerschichten fungierenden Erhöhungen entweder leitfähig oder mit einer - vorzugsweise dehnbaren, wie weiter unten genauer angegeben, - leitfähigen Schicht beschichtet. Diese Elastomererhöhungen der ersten Elastomerschicht stellen insbesondere Messelektroden oder Teile davon dar, die im entlasteten Zustand der Matte in die erfindungsgemäßen Hohlräume zwischen den beiden Elastomerschichten hineinragen und bei einer Druckbelastung der Matte in diese Hohlräume hinein ausweichen können und auch sollen (vgl. Fig. 1c und 2c). Bei einer Druckbelastung der Sensormatte nach Variante a) ändert sich daher in der Regel nicht nur der Elektrodenabstand, sondern auch die Geometrie und - vor allem im Falle einer zweiten Elastomerschicht mit flächigem Profil - aufgrund der Kompression und damit einhergehenden Stauchung auch die Fläche der (ggf. jeweiligen lokalen) Elektrode auf/in der ersten Elastomerschicht, was ebenfalls zur einer Kapazitätserhöhung beiträgt.

Die Sensormatte gemäß Referenz-Variante b) stellt eine flächige volumenkompressible Elastomermatte mit Poren in deren Innerem und mindestens zwei Elektrodenschichten, von denen mindestens eine zumindest teilweise aus porösem Elastomermaterial ist, dar. Die Elastomermatte nach dieser Variante enthält somit mindestens eine poröse Elastomerschicht; durch die Poren in der Elastomermatte wird diese volumenkompressibel und kann daher relativ leicht zusammengedrückt werden. Es können grundsätzlich auch nichtporöse Elastomerschichten in einer Matte nach Referenz-Variante b) enthalten sein, etwa wenn es zur Erfüllung spezifischer mechanischer Anforderungen an die Stabilität, laterale Dehnbarkeit, Festigkeit etc. der Matte in einer Anwendung zweckdienlich sein sollte.

In einem einfachen Fall hat die Elastomermatte eine Schaumstruktur, die auf einer ihrer Flächenseiten bis zu einer gewissen Dicke elektrisch leitfähig ist, während zwischen den beiden Messelektroden des jeweiligen Kondensators stets auch eine elektrisch isolierende poröse Elastomerschicht oder Teilschicht vorliegt. Die Messelektrode auf der anderen Mattenfläche kann dabei entweder ebenfalls eine leitfähige poröse Elastomerschicht sein/umfassen oder lediglich eine dünne elektrisch leitende Beschichtung der Matte darstellen.

Allgemeiner weist die Elastomermatte in allen Fällen nach der Referenz-Variante b) auf einer ihrer Flächenseiten eine poröse Elastomerschicht auf, die vollständig - und ggf. lateral strukturiert - elektrisch leitend ist und - ggf. mit weiteren elektrisch leitenden und/oder schützenden Schichten bedeckt - als eine der beiden Messelektroden des Kondensators fungiert. In allen Fällen nach Referenz-Variante b) liegt zwischen den beiden Messelektroden des Kondensators auch eine elektrisch isolierende - in der Regel poröse - Elastomerschicht oder Teilschicht. Die Messelektrode auf der anderen Oberfläche der Sensormatte kann dabei entweder ebenfalls eine leitfähige poröse Elastomerschicht darstellen/umfassen oder aber eine dünne elektrisch leitende Beschichtung der Matte sein (Herstellungsmöglichkeiten für dünne Elektrodenschichten werden weiter unten angegeben).

Eine poröse Elastomerelektrode in der Matte nach der Referenz-Variante b) der Erfindung kann z. B. als eine separate, im obigen Sinne vollständig elektrisch leitfähige Elastomerschicht hergestellt werden und in einem fertigen Zustand (d. h. nach abgeschlossener Schäumung und Vernetzung) mit einer elektrisch isolierenden (dielektrischen) porösen Elastomerschicht in der Matte verklebt oder anderweitig mechanisch verbunden werden. Hierbei werden in der Regel dieselben Materialien für die Elastomerschicht und für die Elektrodenschicht eingesetzt. Deren chemische Ähnlichkeit verbessert dabei die Haftung der beiden Komponenten. Stattdessen kann die elektrisch leitfähige Schicht vor dem Verschäumen und vollständigen Vernetzen ohne Kleber oder sonstige Befestigungsmittel mit einer angrenzenden dielektrischen Elastomerschicht homogen verbunden werden, die ebenfalls in der Regel noch nicht verschäumt ist, worauf beide Schichten in fertigungstechnisch vorteilhafter Weise gemeinsam verschäumt und vernetzt werden. Alternativ kann eine im obigen Sinne vollständig elektrisch leitende poröse Elastomerschicht als Teilschicht einer ansonsten elektrisch isolierenden porösen Elastomerschicht hergestellt werden, etwa durch eine einseitige Zufuhr leitfähiger Partikel zu einer derartigen Gesamtschicht bei deren Herstellung. Der Begriff "Teilschicht" bezieht sich in der Regel auf die Dicke der Gesamtschicht, sodass die erhaltene Elastomergesamtschicht bis zu einer bestimmten Dicke elektrisch leitfähig und darüber hinaus elektrisch isolierend ist.

In allen Fällen nach der Referenz-Variante b) kann das Dickenverhältnis der (einseitig oder beidseitig in der Sensormatte vorliegenden) elektrisch leitenden zu den (im Inneren der Matte angeordneten) elektrisch isolierenden porösen Elastomerschichten z. B. 1:1, 2:1, 1:2, in spezifischen Ausführungsformen auch 3:1, 4:1, 5:1 oder sogar mehr, oder aber 1:3, 1:4, 1:5 oder noch weniger betragen.

Die Porosität kann offen oder geschlossen sein. Zu den Seitenrändern der Elastomermatte hin können die Poren geöffnet, z. B. untereinander verbunden, sein. Letzteres kann zum seitlichen Entweichen von Gasen aus der Sensormatte bei deren Druckbelastung sogar erwünscht sein.

Im Unterschied zu künstlich strukturierten Hohlräumen nach der Variante a) der Erfindung sind Poren in ihrer Größe und ihrer räumlichen Verteilung statistisch verteilt. Die Poren sind in der Regel z. B. rundlich oder in ihren Grenzbereichen abgerundet ausgebildet. Sie entstehen meist bei der Herstellung bzw. Vernetzung der Matrix der Elastomermatte.

Es können in einer und derselben Elastomermatte nach Referenz-Variante b) sowohl offene als auch geschlossene Poren vorliegen. Das Vorhandensein offener Poren in allen Schichten macht die Matte gasdurchlässig und damit atmungsaktiv, was für Anwendungen im häuslichen Bereich (in Stühlen oder Betten), für Autositze und insbesondere für medizinische Zwecke (als Sensormatte zur Vermeidung von Dekubitus u.dgl.) von Vorteil ist.

Eine oder mehrere nichtporöse Deck- oder Zwischenschichten können auf einer oder auf beiden Flächenseiten einer porösen Elastomerschicht eingesetzt werden, beispielsweise zur Verbesserung der Haftung einer Elektrodenschicht auf einer dielektrischen Elastomerschicht oder zur besseren Trennung einer elektrisch leitenden von einer angrenzenden isolierenden Elastomerschicht bzw. zur mechanischen Festigung/Stabilisierung der Matte.

Bei den in der Elastomermatte zu deren Flächenseiten hin geschlossenen Poren kann es sich neben vollständig darin eingeschlossenen Poren insbesondere auch um zu einem Seitenrand der Elastomermatte hin geöffnete, beispielsweise schlauchartige Hohlräume handeln. Ein schlauchartiger Hohlraum kann insbesondere auf seinen beiden Enden am jeweiligen Seitenrand der flächigen Elastomermatte nach außen offen sein. Durch eine derartige seitliche Öffnung eines Hohlraums kann z. B. die Luft beim Zusammendrücken der Sensormatte daraus entweichen und beim Entlasten der Matte wieder hineindringen.

Insbesondere im Falle einer offenen Porosität trägt eine elektrisch nicht leitende poröse Elastomerschicht häufig eine dünne nichtporöse Zwischenschicht auf einer oder auf beiden ihren Flächenseiten, sodass z. B. das Elektrodenmaterial beim Beschichten nicht in die an einer Flächenseite neben den geschlossenen Poren ebenfalls vorhandenen offenen Poren eindringen kann. In der Regel wird auch die Zwischenschicht aus einem Elastomermaterial gefertigt, wodurch unter anderem die Geschlossenheit der Poren zu den Flächenseiten der Elastomermatte hin gewährleistet werden kann.

In den erfindungsgemäßen Ausführungsformen besitzt die Sensormatte eine Ausgestaltung gemäß Variante a), bei der die Elektrodenschicht, die sich auf der Außenseite der zweiten Elastomerschicht befindet, und im Falle des Vorhandenseins einer (separaten) Elektrodenschicht auf dem Profil der ersten Elastomerschicht auch diese Elektrodenschicht, ihrerseits aus einer elektrisch leitfähig ausgebildeten porösen Elastomerschicht besteht/bestehen oder eine solche umfasst/umfassen. In diesen Ausgestaltungen der Erfindung kann bzw. können die Elektrodenschicht(en) jede Form und jedes Merkmal - einzeln oder in Kombination - besitzen, das in diesem Anmeldetext im Zusammenhang mit der Referenz-Variante b) beschrieben wird.

In weiteren besonderen Ausführungsformen der Erfindung, die mit den im vorherigen Absatz beschriebenen Ausführungsformen kombinierbar sind, statt dessen aber auch separat realisiert werden können, besitzt die Sensormatte eine Ausgestaltung gemäß Variante a) worin entweder die erste Elastomerschicht porös ist, und zwar unabhängig davon, ob sie durchgehend aus elektrisch leitendem Material besteht oder mit einer Elektrodenschicht bedeckt ist, und/oder die zweite, nichtleitende Elastomerschicht porös ist.

In jedem Falle sollten die auf Profiloberflächen aufgetragenen Elektroden den bestimmungsgemäßen Verformungen der jeweiligen Elastomerschicht ohne Beeinträchtigung der elektrischen Leitfähigkeit folgen können, d. h. ggf. beträchtlich (etwa 3% oder 5% pro lokale Fläche) oder sogar stark (10% pro lokale Fläche oder mehr) dehnbar sein etc. Anwendbar sind z. B. Herstellungsmethoden wie bei stark dehnbaren dielektrischen Elastomerfolien. Das Gleiche gilt für bestimmungsgemäße Verformungen, ggf. auch Dehnungen, einer vollständig leitfähigen Elastomerschicht, d. h. auch hier sollte die Überschreitung der Perkolationsschwelle der Partikeldichte dementsprechend ausreichend hoch sein, um erforderliche Dehnbarkeitswerte von 3%, 5% oder sogar 10% pro Fläche oder mehr zu erreichen.

Beim Zusammendrücken der Sensormatte werden die Erhöhungen auf den einander zugewandten Oberflächen der beiden Elastomerschichten in einer definierten Weise stark verformt (insbesondere verstaucht), wodurch sich die entsprechenden zwei Elektrodenschichten, die ein ggf. lokales Elektrodenpaar beispielsweise mit eigenen zur Kapazitätsmessung vorgesehenen elektrischen Zuleitungen bilden, insgesamt annähern und sich dadurch die Kapazität dieses Elektrodenpaares drastisch erhöht.

In allen Fällen nach der Variante a) der erfindungsgemäßen Sensormatte können die Erhöhungen im Profil einer Elastomerschicht untereinander variierende Form besitzen, z. B. unterschiedliche Höhe oder Dicke haben, was für bestimmte Anwendungen, wie z. B. bei entlang der Fläche der Sensormatte variierenden Anforderungen an deren mechanische Stabilität oder die Sensorempfindlichkeit, günstig sein kann.

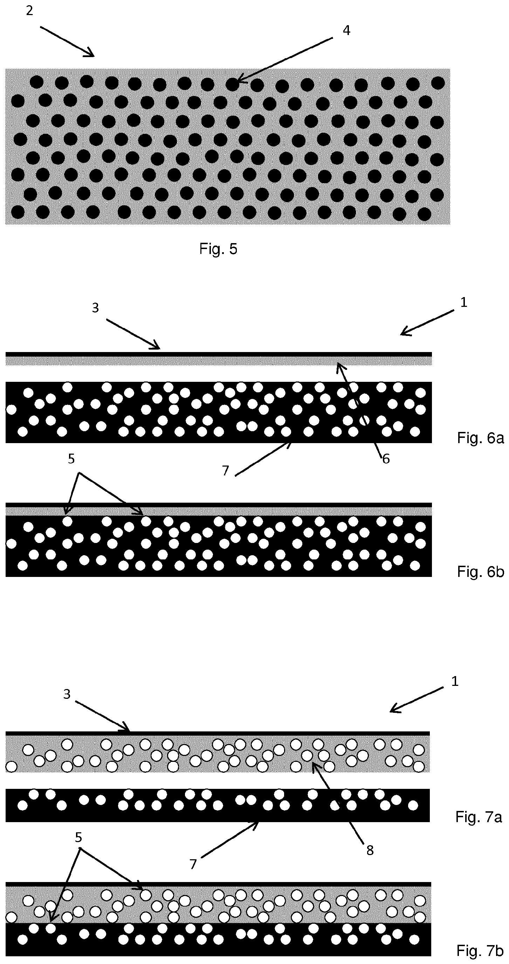

Einfachheitshalber wird im Folgenden und in den Figuren jedoch überwiegend und rein beispielhaft von untereinander identisch oder ähnlich ausgebildeten Erhöhungen/Vertiefungen ausgegangen. Darüber hinaus ist/sind das/die Oberflächenprofil(e) einer/der Elastomerschicht(en) in der erfindungsgemäßen Sensormatte nach Variante a) vorzugsweise periodisch ausgebildet. Eine periodische Verteilung der Profil-Erhöhungen bzw. -Vertiefungen über die Fläche trägt zu einer Vergleichmäßigung der Sensorempfindlichkeit über seine Fläche und zur Genauigkeit der Druck- oder Deformationsmessung bei. Die Periodizität kann eindimensional, besonders bevorzugt zweidimensional sein. Alternativ zu einer ein- oder zweidimensionalen periodischen (insbesondere arrayförmigen) Anordnung kann eine hexagonale Anordnung von Profilerhöhungen/Säulen in der Fläche vorliegen (vgl. Fig. 5), die ebenfalls vorzugsweise periodisch ist.

Das jeweilige - ggf. periodische - Oberflächenprofil kann in einem einfachen Fall durch rechtwinklig ausgebildete Stege, Stufen oder Säulen gebildet sein oder, falls geeignet, im vertikalen Querschnitt eine Sinus- oder andere Wellenform oder aber eine Trapez- oder Dreiecksform aufweisen. Nicht periodische Profile können bei Anwendungen von Vorteil sein, bei denen die Anforderungen an die Druckmessung und die Stabilität entlang der Fläche der Sensormatte variieren. Die Periodizität bzw. Nichtperiodizität der Profilerhöhungen kann in einem Zusammenhang/ einer Korrelation mit der Strukturierung der Elektrodenschichten stehen, auf die weiter unten eingegangen wird. Die Periodizität bzw. eine nichtperiodische Verteilung der Profilerhöhungen kann sowohl eindimensional als auch zweidimensional sein.

Eine zentrale Wirkung der volumenkompressiblen kapazitiven flexiblen (und ggf. lateral dehnbaren) flächigen Sensormatte nach beiden Varianten besteht darin, dass damit Druckverteilungen bzw. Deformationen/Verformungen und/oder Auflagedrücke sensibel und großflächig, bei Bedarf so fein wie erforderlich nach dem Ort aufgelöst, gemessen (bzw. detektiert) werden können. Durch den erfindungsgemäßen Einsatz von Elastomermaterialien für sämtliche tragenden flexiblen Schichten der Sensormatte werden zugleich eine einfache und kostengünstige Herstellung (z. B. aus einem und demselben Material), eine sehr hohe Druckempfindlichkeit durch eine geeignete Strukturierung der Elastomerschicht(en) und deren Poren/Hohlräume/Erhöhungen sowie eine gewisse oder bei Bedarf sogar eine beträchtliche laterale Dehnbarkeit (von über 3%, über 5% oder sogar über 10% pro Fläche, siehe unten) eines lokalen Bereichs oder des gesamten Sensors ermöglicht. Ein wesentlicher Vorteil ist dabei die mechanische Flexibilität der Matte, denn auch Druckverteilungen auf verformbaren Unterlagen wie Sitzflächen oder Betten können damit ermittelt werden, problemlos gerade im Dauereinsatz. Ein besonderer Vorteil aus der Sicht der niedrigen Herstellungskosten ist zudem der einfache Aufbau, ferner die wenig aufwendige Messelektronik, was die erfindungsgemäße Sensormatte auch für Massenanwendungen nutzbar macht.

Mögliche Anwendungen der Erfindung sind:
- Registrierung der Sitzbelegung, des Gewichtes und der Sitzposition von Fahrzeuginsassen im Automobil zur Steuerung des Airbags etc.;
- Erfassung der Druckverteilung von bewegungsunfähigen bettlägerigen Patienten zur Verhinderung von schwer heilenden Wunden (Dekubitus);
- Messung der Druckverteilung von querschnittsgelähmten Personen beim Sitzen im Rollstuhl zur Vermeidung von Wunden;
- Detektion der Druckverteilung im Schuh, z. B. bei Diabetes-Patienten oder auch für orthopädische Analysen;
- Sensorflächen auf Fußböden zur Detektion von darauf tretenden Personen für Sicherheitszwecke;
- Analyse des Schlafverhaltens durch die Registrierung von Bewegungen in Betten;
- Flexible Waagen oder andere flexible Drucksensoren;
- Sensorflächen auf lastempfindlichen Flächen wie Ausstellungs- oder Vitrinenböden etc. zur Detektion bzw. Messung der Druckverteilung, Deformation und/oder Gesamtlast;
- Messung von Flüssigkeitsdrücken, etwa als Füllstandssensor zur Messung der Füllhöhe von Flüssigkeiten, z. B. in Tanks oder anderen Behältern;
- Messung von Gasdrücken, z. B. an Flugzeugtragflächen, oder von Differenzdrücken von Gasen;
- Messung von Auflagedrücken von dispersen Stoffen wie Pulvern und rieselfähigen Materialien, z. B. in Silos oder bei der Pulververarbeitung.

Aus den sehr breiten technischen Anwendungsgebieten lässt sich eine entsprechend hohe wirtschaftliche Bedeutung der Erfindung ableiten. Allein das Anwendungsgebiet der Sitzbelegungsanalyse im Fahrzeug zeigt einen Markt auf, der sehr hohe Umsätze generieren kann.

Bevorzugte Ausführungsformen der Erfindung sind in den abhängigen Ansprüchen und in der nachfolgenden Beschreibung angegeben.

Bei der erfindungsgemäßen Variante a) sind vorzugsweise einige, besonders bevorzugt alle Erhöhungen auf mindestens einer der beiden Elastomerschichten als Stege mit einem Aspektverhältnis von Höhe zu Dicke/Breite/Durchmesser von mindestens 1 ausgebildet. Je höher die Erhöhung, desto größer ist in der Regel die absolute Abstandsänderung zwischen den Elektroden beim Zusammendrücken der Sensormatte. Auch je schmaler die Erhöhung, desto empfindlicher kann die Sensormatte auf Druck reagieren, insbesondere weil zwischen schmalen Erhöhungen größere Hohlraumvolumina bei der Herstellung der Matte geschaffen werden können. Alternativ zu der Stegform kann eine Säulenform, beispielsweise mit einem kreisförmigen, ovalen, rechteckigen etc. Querschnitt, mit einem Aspektverhältnis von Höhe zu Dicke/Durchmesser von mindestens 1 vorliegen.

Es kann eine sich mit steigendem Abstand von der zugehörigen Elastomerschicht verjüngende Form der Stege bzw. Säulen gewählt werden, was beispielsweise für die mechanische Stabilität der Matte von Vorteil sein kann.

Die Profiltiefe kann bei einer oder ggf. bei beiden Elastomerschichten in der Regel 0,3 oder mehr der Gesamtdicke der jeweiligen Elastomerschicht betragen, vorzugsweise mindestens 0,5, besonders bevorzugt mindestens 0,7. Die durchgehende bzw. ununterbrochene Elastomerschicht ist im Wesentlichen eine Trägerschicht und dient daher vor allem der mechanischen Stabilität, dem Zusammenhalt und ggf. der Dehnbarkeit der Sensormatte. Für die Funktionalität der Sensormatte als Druck- und Verformungssensor sind dabei jedoch möglichst stark ausgeprägte Profilerhöhungen im Verhältnis zur Gesamtdicke der Elastomerschicht von Vorteil.

Der beim Zusammenfügen der beiden Elastomerschichten bei der Variante a) entstehende und in der fertigen Sensormatte ohne Druckbelastung vorliegende gesamte Hohlraum zwischen den Erhöhungen bzw. um die Erhöhungen herum hat vorzugsweise mindestens das Volumen, welches von den Erhöhungen selbst eingenommen wird. Je größer das entsprechende relative Hohlraumvolumen ist, desto stärker lassen sich die Erhöhungen stauchen, d. h. umso empfindlicher wird die Kapazitätsmessung und somit die Verformungs- oder Druckermittlung. Das Gleiche gilt entsprechend auch für die Referenz-Variante b). Auch hier ist das Porenvolumen vorzugsweise mindestens gleich dem Volumen des gesamten Elastomermaterials der Matte ohne Poren.

In einer spezifischen Ausführungsform nach der Referenz-Variante b) sind stets Poren vorhanden, welche in der Elastomermatte zu deren beiden Flächenseiten hin geschossen sind. Insbesondere im Falle einer offenen Porosität trägt eine elektrisch nicht leitende poröse Elastomerschicht vorzugsweise eine dünne nichtporöse Zwischenschicht auf einer oder auf beiden ihren Flächenseiten, sodass z. B. das Elektrodenmaterial beim Beschichten nicht in die an einer Flächenseite neben den geschlossenen Poren ebenfalls vorhandenen offenen Poren eindringen kann. In der Regel wird auch die Zwischenschicht aus einem Elastomermaterial gefertigt, wodurch unter anderem die Geschlossenheit der Poren zu den Flächenseiten der Elastomermatte hin gewährleistet wird.

Vorzugsweise beträgt die Dicke der Sensormatte nach beiden Varianten insgesamt 10 mm oder weniger, bevorzugt liegt sie unter 5 mm, besonders bevorzugt unter 3 mm. Dies gilt auch für die Dicke der jeweiligen Elastomerschicht bei der Variante a), die insbesondere noch dünner, etwa unter 2,5 mm, vorzugsweise unter 1,5 mm, gewählt werden kann.

Aufgrund der Elastizität der Elastomerschicht(en) besteht bei der erfindungsgemäßen Sensormatte die Möglichkeit, eine je nach Bedarf mehr oder minder starke Dehnbarkeit der Sensormatte entlang der Mattenfläche zu gewährleisten. Dies ist für Anwendungen auf nachgiebigen/verformbaren Unterlagen, wie z. B. auf Betten, Sitzflächen oder stark unebenen Unterlagen, von besonderer Bedeutung, auf denen die flächige Sensormatte durch die Auflage nicht nur in senkrechter Richtung gestaucht sondern in der Regel auch merkbar in waagerechter Richtung gedehnt wird bzw. in Vertiefungen eingedrückt wird.

Daher ist bei einer Sensormatte nach der Erfindung vorzugsweise eine gewisse Dehnbarkeit entlang der Mattenfläche (im Folgenden auch als laterale Dehnbarkeit bezeichnet) gewährleistet, die je nach Erfordernissen der Anwendung auf eine lokale Teilfläche oder auf die Gesamtfläche der Matte bezogen beispielsweise 1% oder mehr, insbesondere 3% oder mehr, vorzugsweise 5% oder mehr, besonders bevorzugt 10% oder sogar noch mehr betragen kann.

Auch die erfindungsgemäß zur Kapazitätsmessung vorgesehenen Elektroden bzw. dünne Elektrodenschichten wie auch vollständig elektrisch leitfähige Elastomerschichten sollen zumindest entsprechend der erforderlichen lateralen Dehnbarkeit der Sensormatte dehnbar ausgestaltet sein. Dies kann bei dünnen Elektrodenbeschichtungen beispielsweise durch das Aufbringen von elektrisch leitfähigen Partikeln mit einer Dichte deutlich oberhalb der Perkolationsschwelle auf eine Elastomerschicht der Sensormatte erfolgen. Die Partikel können dabei z. B. in einer konzentrierten Form als Pulver mit einem geeigneten Kleber bzw. als Paste aufgetragen werden, alternativ in einem Trägermedium, wie z. B. einem Gel oder einer Elastomer-Matrix verteilt sein und mit dem Trägermedium auf die Elastomerschicht aufgebracht, z. B. aufgerakelt werden. Entsprechendes gilt für die leitfähigen Elastomerschichten nach der Erfindung, wie oben bereits erwähnt.

In allen Fällen und Varianten nach der Erfindung wird vorzugsweise durch eine Strukturierung der Elektrodenfelder/Elektroden/Elektrodenschichten erreicht, dass der auf dem Sensor anliegende Druck ortsaufgelöst an verschiedenen Stellen, d. h. in verschiedenen Flächensegmenten der flächigen Sensormatte, gemessen werden kann. Die jeweilige Elektrodenschicht ist in diesem Fall in elektrisch voneinander getrennte oder miteinander verbundene, zu verschiedenen Elektrodenpaaren gehörende Unterstrukturen unterteilt. In einem einfachen Fall entsteht auf diese Weise entlang der Fläche der Sensormatte ein ein- oder zweidimensionales, insbesondere periodisches, Sensorarray. Es kann aber auch eine andere, z. B. unregelmäßige, Anordnung von mehreren Sensorflächen, d. h. Elektrodenpaaren, vorliegen.

Die Wahl einer konkreten Geometrie einer solchen Flächen-Strukturierung der Elektrodenschichten hängt von den Erfordernissen der Anwendung ab, wie z. B. von der erforderlichen Feinheit der Ortsauflösung der zu detektierenden bzw. zu messenden Druckverteilung oder von der Art und Form der erwarteten Druck- oder Deformationsverteilung in der Sensormattenfläche. Die Realisierung eines gewünschten Strukturierungsmusters kann in einer an sich bekannten Weise erfolgen, z. B. durch mithilfe einer Maske erfolgendes Auftragen von Elektrodenschichten auf die zu elektrodierende Oberfläche. Auch das Aufsprühen oder ein Siebdruck statt einer Maske können hierzu verwendet werden.

Vorzugsweise weist die erfindungsgemäße Sensormatte mindestens zwei Paare von Elektroden in verschiedenen Flächensegmenten auf. Besonders bevorzugt ist eine ein- oder zweidimensionale periodische Array-Anordnung von Elektrodenpaaren über die Sensorfläche. Diese lässt sich sowohl am einfachsten herstellen als auch auslesen, zudem ist durch eine periodische Anordnung eine gleichmäßige Unterteilung der Fläche des Sensors am einfachsten realisiert.

Während in der Regel, z. B. im Fall von bettlägerigen Patienten, eine Ortsauflösung von 0,01 bis 0,1 Elektrodenpaar pro cm² bereits ausreichen kann, sind mit der erfindungsgemäßen Sensormatte auch erheblich feinere Ortsauflösungen von über 1 cm⁻² möglich.

In allen Fällen der Erfindung können darüber hinaus nichtleitfähige Schutzschichten auf einer oder mehreren der Elektrodenschichten zum mechanischen und/oder elektrischen Schutz der jeweiligen Elektrode nach außen vorgesehen werden.

In einer Sensormatte nach der Erfindung kann eine zur Messung der Kapazität zwischen den mindestens zwei Elektroden geeignete Kapazitätsmesseinrichtung vorgesehen sein. Die Kapazitätsmesseinrichtung stellt in einem einfachen Fall elektrische Zuleitungen, wie etwa Metalldrahtverbindungen, zu den mindestens zwei Elektroden oder elektrische Anschlüsse hierfür dar. Damit können zwischen den Elektroden beispielsweise Spannung angelegt und Strom gemessen werden. Alternativ kann die Kapazitätsmessung auch per Funkübertragung erfolgen. In diesem Fall kann die Kapazitätsmesseinrichtung einen oder mehrere, z. B. in der Sensormatte angeordnete, Transponder aufweisen.

Bei allen Ausgestaltungen der erfindungsgemäßen Sensormatte können die Elektrodenschichten bzw. die Elektroden leitfähige Partikel aus Kohlenstoff wie Graphit, Graphen oder Carbon Nanotubes, aus Metallen wie Aluminium, Eisen, Kupfer, Silber oder Gold oder aus leitfähigen Polymeren wie Polyanilin, Polyacetylen, Polypyrrol, Polyparaphenylen oder Polythiophen oder eine Kombination daraus enthalten. Die Partikeldichte sollte dabei - ggf. deutlich - oberhalb der Perkolationsschwelle liegen.

Die Elastomerschicht bzw. eine der Elastomerschichten kann/können Silicon, Fluorsilicon, Polyurethan (PUR), Polynorbornen, Naturkautschuk (NR), Styrol-Butadien (SBR), Isobutylen-Isopren (IIR), Ethylen-Propylen-Dien-Terpolymer (EPDM/EPM), Poly-Chlorbutadien (CR), Chlorsulfoniertes Polyethylen (CSM), Acrylnitril-Butadien (NBR), Hydriertes Acrylnitril-Butadien (HNBR), einen Fluorkautschuk wie Viton, ein thermoplastisches Elastomer wie thermoplastische Styrol-Copolymere (Styrol-Butadien-Styrol- (SBS-), Styrol-Ethylen-Butadien-Styrol- (SEBS-), Styrol-Ethylen-Propylen-Styrol- (SEPS-), Styrol-Ethylen-Ethylen-Propylen-Styrol- (SEEPS-) oder Styrol-Isopren-Styrol- (SIS-) Copolymer), teilvernetzte Blends auf Polyolefin-Basis (aus Ethylen-Propylen-Dien-Kautschuk und Polypropylen (EPDM/PP), aus Nitril-Butadien-Kautschuk und Polypropylen (NBR/PP) oder aus Ethylen-Propylen-Dien-Kautschuk und Polyethylen(EPDM/PE)) oder thermoplastische Urethan-Copolymere (aromatisches Hartsegment und Ester-Weichsegment (TPU-ARES), aromatisches Hartsegment und Ether-Weichsegment (TPU-ARET) oder aromatisches Hartsegment und Ester/Ether-Weichsegment (TPU-AREE)) enthalten. Sie kann/können aus einem dieser Materialien bestehen. Kombinationen von zwei oder mehr verschiedenen diesen Materialien in einer Elastomerschicht sind ebenfalls möglich.

Die Elastomerschicht bzw. eine der Elastomerschichten kann elektrisch polarisierbare Partikel wie Bariumtitanat, Bleizirkonattitanat oder Titandioxid und/oder elektrisch leitfähige Partikel aus Kohlenstoff wie Graphit, Graphen oder Carbon Nanotubes, Metalle wie Eisen, Kupfer, Silber oder Gold oder leitfähige Polymere wie Polyanilin, Polyacetylen, Polypyrrol, Polyparaphenylen oder Polythiophen oder eine organische Modifizierung zur Erhöhung der Permittivität enthalten. Die Partikeldichte der elektrisch leitenden Partikel muss dabei bei nicht elektrisch leitfähigen Elastomerschichten unterhalb der Perkolationsschwelle bleiben, oder aber man verwendet mit einem Isolator beschichtete Partikel.

Sämtliche Einzelkombinationen aus diesen drei Listen in einer erfindungsgemäßen Sensormatte sind möglich und sollen daher als offenbart gelten.

Elektrodenschichten bzw. Elastomerschichten können bei der erfindungsgemäßen Sensormatte beispielsweise durch Rakeln, Formgießen, Spritzgießen bzw. Sprühen hergestellt sein.

Eine Sensormatte nach der Erfindung kann in einem Drucksensor oder einem Drucksensor-Array, Dehnungssensor oder Dehnungssensor-Array, Verformungssensor oder Verformungssensor-Array verwendet werden, wobei die Veränderung der Kapazität zwischen den mindestens zwei Elektroden gemessen wird. Ein solcher Sensor bzw. ein solches Sensorarray kann direkt zur Ansteuerung eines Airbags oder eines anderen Geräts, z. B. der Drucksteuerung bei Wechseldruckmatratzen verwendet werden. Der Sensor bzw. das SensorArray kann aber auch insbesondere mit einem Display zur vorzugsweise graphischen Anzeige der gemessenen Druck- oder Deformationsverteilung auf dem Sensor ausgerüstet sein, z. B. zur visuellen Überwachung. Alternativ kann der/das Sensor/Sensorarray mit einer computerlesbaren Software zu einer solchen Anzeige ausgestattet sein, sodass die Druck- oder Deformationsverteilung an einem externen PC oder Laptop beispielsweise zu einem späteren Zeitpunkt eingesehen werden kann.

Ein weiterer Aspekt der Erfindung ist ein Aufnahmebehälter für fluide Medien wie Flüssigkeiten, Gase, Pulver, rieselfähige Materialien oder disperse Stoffe oder für nachgiebige Medien wie Gele oder biologische Materialien, welcher Aufnahmebehälter in einer seiner Boden-, Decken- oder Seitenwände eine Sensormatte nach der Erfindung aufweist, dergestalt dass bei der Aufnahme eines fluiden bzw. nachgiebigen Mediums im Aufnahmebehälter die Sensormatte den vom fluiden bzw. nachgiebigen Medium ausgeübten Druck messen bzw. angeben kann. Ein erfindungsgemäßer Aufnahmebehälter kann insbesondere die Ausgestaltung gemäß Anspruch 14 haben.

Bei einem solchen Aufnahmebehälter kann die Sensormatte im Aufnahmebehälter untrennbar integriert sein oder aber vom Aufnahmebehälter abnehmbar - z. B. als Deckel oder als abnehmbarer Boden - ausgebildet sein.

Beispielsweise kann die flexible Sensormatte als Messdeckel zur Gasdruck(differenz)messung für im erfindungsgemäßen Aufnahmebehälter aufbewahrtes Gas eingesetzt werden.

Die Erfindung richtet sich auch auf eine Verwendung des erfindungsgemäßen Sensors als flexibler Drucksensor oder als Sensorarray zur Messung von flächigen Druckverteilungen wie beispielsweise auf oder in Sitzen, Betten, Matratzen, Schuhen, Teppichen, Regalen, Vitrinen, Fußböden oder anderen Unterlagen sowie auf eine Verwendung als Deformations- und Verformungssensor oder als Füllstandssensor, Gasdruck- oder Gasdruckdifferenzsensor oder Auflagedrucksensor für fluide Medien.

Weitere Vorteile der Erfindung werden nachfolgend anhand der in den Figuren und der zugehörigen Beschreibung dargestellten Ausführungsbeispiele erläutert. Diese sollen keine beschränkende Wirkung für den Erfindungsgegenstand haben, sondern als konkrete Beispiele dafür dienen. Die darin gezeigten/beschriebenen Merkmale können auch in anderen als den explizit genannten Kombinationen in einem Sensor nach der Erfindung vorliegen und/oder mit den weiter oben genannten Merkmalen kombiniert werden. Insbesondere sind die Figuren schematische Darstellungen, die nicht maßstabsgetreu zu lesen sind.

Es zeigen:
Fig. 1a) Explosionsdarstellung (im Querschnitt) einer erfindungsgemäßen Sensormatte nach Variante a) mit periodischen stegförmigen Profilerhöhungen einer gleichbleibenden Dicke auf beiden Elastomerschichten (Ausführungsbeispiel 1 zu Variante a));
Fig. 1b) Querschnittsdarstellung der Sensormatte aus Fig. 1a) in einem fertigen/zusammengesetzten Zustand ohne Druckbelastung/Deformation;
Fig. 1c) Querschnittsdarstellung der Sensormatte aus Fig. 1b) in einem belasteten/komprimierten Zustand;
Fig. 2a) Ausführungsbeispiel wie in Fig. 1a), jedoch mit trapezförmigen statt stegförmigen Profilen bei den beiden Elastomerschichten (Ausführungsbeispiel 2 zu Variante a));
Fig. 2b) Querschnittsdarstellung der Sensormatte aus Fig. 2a) in einem fertigen/zusammengesetzten Zustand ohne Druckbelastung/Deformation;
Fig. 2c) Querschnittsdarstellung der Sensormatte aus Fig. 2b) in einem belasteten/komprimierten Zustand;
Fig. 3a) Ausführungsbeispiel wie in Fig. 1a), bei dem jedoch allein die erste (elektrisch leitfähige) Elastomerschicht Profilerhöhungen trägt, während die zweite (dielektrische) Elastomerschicht ein ebenes Profil besitzt (Referenz-Ausführungsbeispiel 3 zu Variante a));
Fig. 3b) Querschnittsdarstellung der Sensormatte aus Fig. 3a) in einem fertigen/zusammengesetzten Zustand ohne Druckbelastung/Deformation;
Fig. 3c) Querschnittsdarstellung der Sensormatte aus Fig. 3b) in einem belasteten/komprimierten Zustand;
Fig. 4a) Ausführungsbeispiel wie in Fig. 3a), jedoch mit einem trapezförmigen statt dem stegförmigen Profil (Referenz-Ausführungsbeispiel 4 zu Variante a));
Fig. 4b) Querschnittsdarstellung der Sensormatte aus Fig. 4a) in einem fertigen/zusammengesetzten Zustand ohne Druckbelastung/Deformation;
Fig. 4c) Querschnittsdarstellung der Sensormatte aus Fig. 4b) in einem belasteten/komprimierten Zustand;
Fig. 5) Aufsicht auf die erste Elastomerschicht einer erfindungsgemäßen Sensormatte nach Variante a) mit hexagonal angeordneten elektrisch leitfähigen Profilerhöhungen (Ausführungsbeispiel 5 zu Variante a));
Fig. 6a) Explosionsdarstellung (im Querschnitt) einer Sensormatte nach Referenz-Variante b) mit einer porösen Elastomer-Elektrode (Ausführungsbeispiel 1 zu Referenz-Variante b));
Fig. 6b) Querschnittsdarstellung der Sensormatte aus Fig. 6a) in einem fertigen/zusammengesetzten Zustand ohne Druckbelastung/Deformation;
Fig. 7a) Explosionsdarstellung (im Querschnitt) einer Sensormatte nach Referenz-Variante b) mit poröser Elektrode und porösem Dielektrikum (Ausführungsbeispiel 2 zu Referenz-Variante b));
Fig. 7b) Querschnittsdarstellung der Sensormatte aus Fig. 7a) in einem fertigen/zusammengesetzten Zustand ohne Druckbelastung/Deformation;
Fig. 8a) Explosionsdarstellung (im Querschnitt) einer Sensormatte nach Referenz-Variante b) mit poröser Elektrode und porösem Dielektrikum mit außenseitigen isolierenden Schutzschichten (Ausführungsbeispiel 3 zu Referenz-Variante b));
Fig. 8b) Querschnittsdarstellung der Sensormatte aus Fig. 8a) in einem fertigen/zusammengesetzten Zustand ohne Druckbelastung/Deformation;
Fig. 9a) Draufsicht auf eine eindimensional periodische Längs-Strukturierung einer Elektrodenschicht in einer erfindungsgemäßen Sensormatte nach Variante a) oder einer Sensormatte nach Referenz-Variante b);
Fig. 9b) Draufsicht auf eine eindimensional periodische Quer-Strukturierung einer der in Fig. 9a) dargestellten Elektrodenschicht gegenüberliegenden Elektrodenschicht derselben Sensormatte;
Fig. 10) Draufsicht auf eine Sensormatte, die wie in Figuren 9a) und 9b) gezeigt auf ihren beiden Flächenseiten mit jeweils einer eindimensional strukturierten Elektrodenschicht bedeckt ist.

### Bezugszeichenliste:

1 Sensormatte
2 elektrisch leitfähige erste Elastomerschicht mit einem unebenen Profil 2' dielektrische zweite Elastomerschicht mit einem unebenen Profil
3 ggf. strukturierte Elektrodenschicht (als dünne Beschichtung oder als vollständig elektrisch leitende (dicke) Elastomerschicht ausgestaltet)
4, 4' Erhöhung, Profil einer Elastomerschicht
5 Hohlräume bzw. Poren
6 dielektrische zweite Elastomerschicht mit einem ebenen Profil
7 poröse elektrisch leitfähige Elastomerschicht
8 poröse dielektrische Elastomerschicht
9 elektrisch isolierende Schutzschicht auf einer Elektrode
10 eindimensionales Elektroden-Array
11 zweidimensional auslesbares Elektroden-Array

### Ausführungsbeispiel 1 zu Variante a) der Erfindung

Figur 1a zeigt schematisch den Aufbau eines ersten Ausführungsbeispiels der erfindungsgemäßen Sensormatte nach Variante a) im Querschnitt. Die dargestellte volumenkompressible flexible Sensormatte 1 besteht aus zwei übereinanderliegenden Elastomerschichten 2, 2', die in dieser Figur noch nicht zusammengeführt sind (Explosionsdarstellung), d. h. die Matte ist in einem nicht fertigen (Herstellungs-)Zustand. Die erfindungsgemäße erste Elastomerschicht 2 ist im obigen Sinne - d. h. vorzugsweise durch laterale Strukturierung in mehrere einzelne Elektroden in der Mattenfläche unterteilt -vollständig elektrisch leitfähig ausgebildet und stellt somit eine der beiden Messelektroden 3 (hier schematisch durch schwarze Farbe angedeutet) dar. Auf ihrer der zweiten Elastomerschicht 2' zugewandten Seite sind stegförmige Erhöhungen 4 zu sehen. Die erfindungsgemäße zweite Elastomerschicht 2' ist selbst nicht elektrisch leitend; sie weist auf ihrer Außenseite bezüglich der ersten Elastomerschicht 2 eine dünne Elektrodenschicht/Elektrodenbeschichtung 3 (wiederum schematisch schwarz gezeigt) und auf ihrer der ersten Elastomerschicht zugewandten Innenseite stegförmige Erhöhungen 4' auf.

Zur Auflösung der Kapazitätsmessung nach dem Ort ist jeweils eine laterale Strukturierung einer oder beider Elektroden 3, d. h. eine Aufteilung entlang der Mattenfläche in elektrisch unabhängige oder miteinander gekoppelte/verbundene lokale Elektroden möglich (nicht gezeigt). Profilerhöhungen 4, 4' der beiden Elastomerschichten können ineinandergreifen, sind hier aber noch voneinander getrennt. Die beiden Elastomerschichten sind in Fig. 1a noch nicht zusammengefügt, d.h. die Matte ist in einem nicht fertigen (Herstellungs-)Zustand. Die in diesem Beispiel dargestellten Profile 4, 4' sind eindimensional periodisch mit rechteckigen (stegförmigen) Erhöhungen, die aber auch anders geformt und/oder verteilt sein können, z. B. zweidimensional periodisch oder aperiodisch. Statt einer durchgehend elektrisch leitenden ersten Elastomerschicht 2, die somit zugleich eine Elektrode 3 darstellt, kann die Elastomerschicht 2 in diesem Beispiel alternativ auch eine nichtleitende Elastomerschicht mit einer auf deren Profilseite aufgetragenen/angeordneten - vorzugsweise in weiter oben angegebenen Grenzen lateral dehnbaren - Elektrodenschicht/Elektrodenbeschichtung 3 darstellen.

Figur 1b zeigt schematisch den Aufbau derselben volumen kompressiblen flexiblen Sensormatte 1 im zusammengesetzten, d.h. fertigen Zustand, in dem die Erhöhungen 4, 4' in den übereinanderliegenden Elastomerschichten 2, 2' ineinandergreifen, jedoch nicht komprimiert sind. Sie liegen lediglich mit ihren Endflächen an der jeweils anderen Elastomerschicht an. Die Matte 1 ist hier nicht belastet bzw. nicht deformiert. Zwischen den Erhöhungen 4, 4' befinden sich gasgefüllte Hohlräume 5, in die das leitfähige bzw. isolierende Elastomermaterial der beiden Elastomerschichten 2 und 2' beim Zusammendrücken der Matte 1 ausweichen kann.

In Figur 1c ist die erfindungsgemäße Sensormatte 1 aus Figur 1b durch die Anwendung eines Druckes zusammengedrückt, wobei die ineinandergreifenden Erhöhungen 4, 4' auf den beiden Elastomerschichten 2, 2' durch den Druck auf die Sensormatte 1 in einer definierten Weise gestaucht sind. Das Volumen der Hohlräume 5 ist dementsprechend verringert. Die Darstellung ist wiederum schematisch.

### Ausführungsbeispiel 2 zu Variante a) der Erfindung

Figuren 2a bis 2c zeigen ein zweites Ausführungsbeispiel der erfindungsgemäßen Sensormatte 1 nach Variante a) im Querschnitt. Dieses unterscheidet sich von dem in Fig. 1 gezeigten Beispiel allein dadurch, dass die Profilerhöhungen 4, 4' hier nicht stegförmig, sondern trapezförmig mit einem sich zu der jeweils anderen Elastomermatte hin verjüngenden Querschnitt ausgebildet sind.

### Referenz-Ausführungsbeispiel 3 zu Variante a) der Erfindung

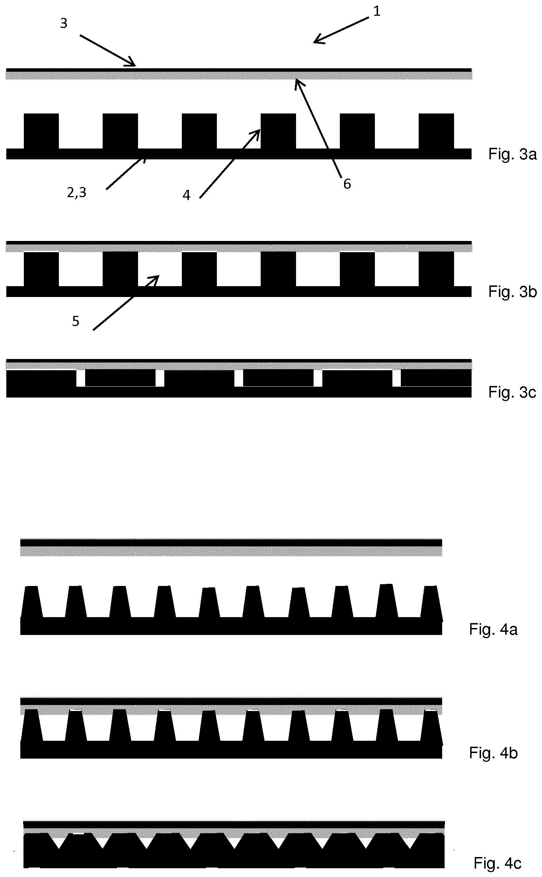

Figuren 3a bis 3c zeigen ein drittes Ausführungsbeispiel Sensormatte 1 nach Variante a) im Querschnitt. Dieses unterscheidet sich von dem in Fig. 1 gezeigten Beispiel allein dadurch, dass sich alle Profilerhöhungen 4 auf der ersten Elastomerschicht 2 befinden und leitfähig sind (oder, alternativ, eine leitfähige Beschichtung tragen: nicht gezeigt). Die zweite, dielektrische Elastomerschicht 6 ist hingegen auf ihrer der ersten Elastomerschicht 2 zugewandten Oberfläche eben ausgebildet. Im Übrigen gilt hier das oben zur Figur 1 Ausgeführte entsprechend.

### Referenz-Ausführungsbeispiel 4 zu Variante a) der Erfindung

Figuren 4a bis 4c zeigen ein viertes Ausführungsbeispiel der Sensormatte 1 nach Variante a) im Querschnitt. Dieses unterscheidet sich von dem in Fig. 3 gezeigten Beispiel allein dadurch, dass die Profilerhöhungen 4 der ersten Elastomerschicht 2 hier nicht stegförmig, sondern trapezförmig mit einem sich zu der zweiten Elastomerschicht 6 hin verjüngenden Querschnitt ausgebildet sind.

### Ausführungsbeispiel 5 zu Variante a) der Erfindung

Figur 5 zeigt schematisch die erste, elektrisch leitfähige Elastomerschicht 2 gemäß einem fünften Ausführungsbeispiel der erfindungsgemäßen Sensormatte 1 nach Variante a) in der Aufsicht. Der Blick ist auf die Profilseite der Elastomerschicht 2 gerichtet. Die Profilerhöhungen 4 - die hier rein beispielhaft Säulen mit konstantem kreisrundem Querschnitt darstellen - sind hexagonal angeordnet und elektrisch leitfähig. Beim Zusammendrücken der Sensormatte werden sie komprimiert. Die zweite, dielektrische Elastomerschicht 2', 6 (nicht gezeigt) kann insbesondere ein ebenes Profil haben oder aber ebenfalls hexagonal verteilte Erhöhungen 4' aufweisen.

Wie in den obigen Ausführungsbeispielen, kann auch hier die erste Elastomerschicht 2 statt im obigen Sinne vollständig leitfähig zu sein alternativ eine nichtleitende Elastomerschicht darstellen, die eine Elektrodenbeschichtung 3 auf deren Profilseite trägt (nicht gezeigt).

### Ausführungsbeispiel 1 zu Referenz-Variante b) der Erfindung

Figur 6a zeigt schematisch den Aufbau eines ersten Ausführungsbeispiels der Sensormatte nach Referenz-Variante b) im Querschnitt und in einer Explosionsdarstellung. Die dargestellte volumenkompressible flexible Sensormatte 1 besteht aus zwei übereinanderliegenden Elastomerschichten 6 und 7. Die beiden Elastomerschichten 6 und 7 sind in Fig. 6a noch nicht zusammengefügt, d. h. die Matte ist in einem nicht fertigen (Herstellungs-)Zustand (Explosionsdarstellung).

Eine erste, gemäß Referenz-Variante b) der Erfindung vorgesehene elektrisch leitfähige Elastomerschicht 7 (eine der beiden Messelektroden) ist porös und damit volumenkompressibel. Sie ist im obigen Sinne vollständig - d. h. gegebenenfalls zusätzlich durch laterale Strukturierung in mehrere Elektroden in der Mattenfläche unterteilt - elektrisch leitfähig ausgebildet und stellt somit eine Elektrode dar (schematisch durch schwarze Farbe angedeutet). Eine weitere, zweite Elastomerschicht 6 ist nicht elektrisch leitend; sie weist auf ihrer Außenseite bezüglich der ersten Elastomerschicht 7 eine dünne Elektrodenschicht 3 (schematisch, d. h. nicht maßstabsgetreu, schwarz gezeigt) auf.

Zur Auflösung der Kapazitätsmessung nach dem Ort ist auch in diesem Beispiel, wie bei den vorangehenden Figuren, jeweils eine laterale Strukturierung einer oder beider Elektroden 3 und 7, d. h. eine Aufteilung entlang der Mattenfläche in elektrisch unabhängige oder miteinander gekoppelte/verbundene lokale Elektroden möglich (nicht gezeigt).

Figur 6b zeigt schematisch den Aufbau derselben volumenkompressiblen flexiblen Sensormatte 1 im zusammengesetzten, d.h. fertigen Zustand, in dem die beiden Elastomerschichten 6 und 7 sich berühren, jedoch nicht komprimiert sind. Die Matte 1 ist hier nicht belastet bzw. nicht deformiert. In der ersten Elastomerschicht (Elektrode) 7 befinden sich gasgefüllte Poren 5, aus denen das Gas beim Zusammendrücken der Matte 1 entweichen kann (offene Porosität) oder in denen es komprimiert wird (geschlossene Porosität).

### Ausführungsbeispiel 2 zu Referenz-Variante b) der Erfindung

Figuren 7a und 7b zeigen ein zweites Ausführungsbeispiel der Sensormatte 1 nach Referenz-Variante b) im Querschnitt. Dieses unterscheidet sich von dem in Fig. 6 gezeigten Beispiel dadurch, dass nicht nur die erste Elastomerschicht 7 (Elektrode) porös ist, sondern auch die zweite Elastomerschicht 8 (Dielektrikum) porös ist. Die zweite Elastomerschicht 8 enthält auf ihrer von der ersten Elastomerschicht 7 abgewandten Seite eine leitfähige Beschichtung 3 (Gegenelektrode).

### Ausführungsbeispiel 3 zu Referenz-Variante b) der Erfindung

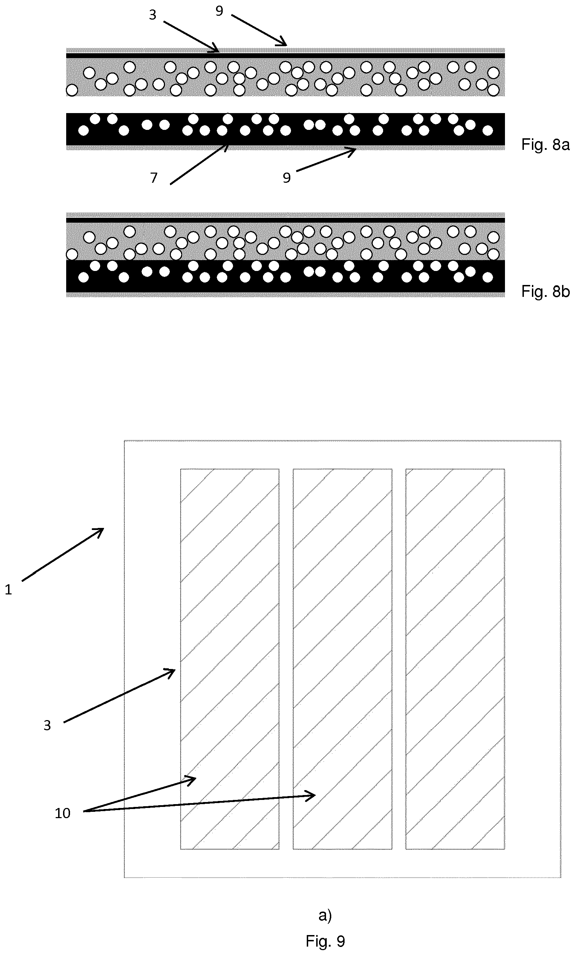

Figuren 8a und 8b zeigen ein drittes Ausführungsbeispiel der Sensormatte 1 nach Referenz-Variante b) im Querschnitt. Dieses unterscheidet sich von dem in Fig. 7 gezeigten Beispiel allein dadurch, dass beide Elektroden 3 und 7 der beiden Elastomerschichten 7 und 8 auf deren jeweils von der anderen Elastomerschicht abgewandten Seite - d. h. außenseitig in der fertigen Sensormatte in Fig. 8b - eine nicht leitfähige Schutzschicht 9 aufweisen.

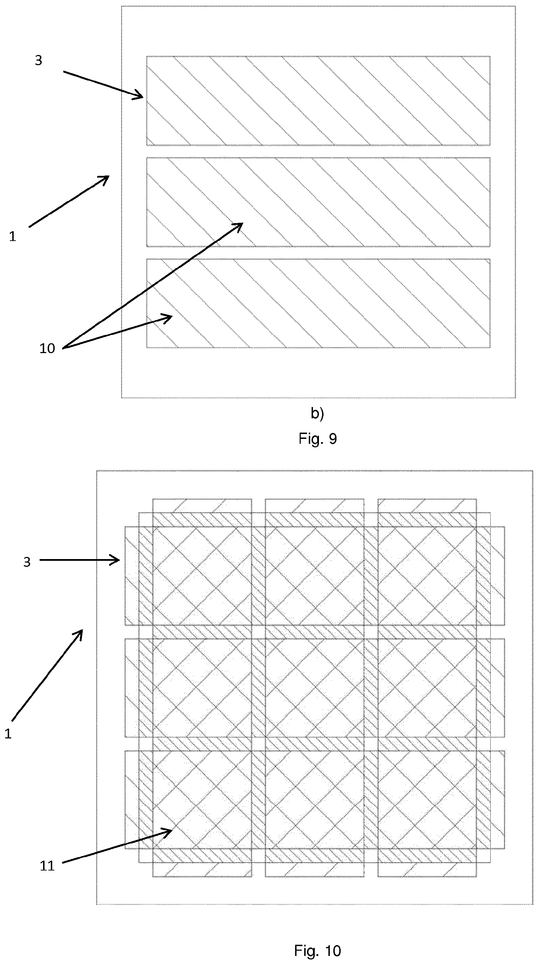

Figur 9 zeigt Draufsichten auf eine Sensormatte 1 mit einer strukturierten quadratischen Elektrodenfläche 3, die ein eindimensionales rechteckiges Array 10 bildet. In Fig. 9a) sind die Elektroden 3 auf einer oberen Seitenfläche der Matte 1 längs in der Bildebene ausgerichtet und in Fig. 9b) sind die Gegenelektroden 3 auf der Rückseite der Sensormatte 1 quer dazu ausgerichtet. Damit wird eine separate Druckmessung auf den einzelnen zweidimensional verteilten Elektrodenfeldern 10, 11 (vgl. Fig. 10) ermöglicht. Die Figuren 9a und 9b können als Beispiele für eine Draufsicht von oben bzw. von unten auf eine Sensormatte 1 sowohl nach Variante a) als auch nach Referenz-Variante b) dienen, d. h. mit den an einer Elastomermatte 1 beidseitig angeordneten strukturierten Elektrodenschichten 3.

Figur 10 zeigt eine projizierende Draufsicht auf eine Sensormatte 1 wie in Figur 9, die beidseitig jeweils mit einer eindimensional strukturierten Elektrodenfläche 3 bedeckt ist, die ein zweidimensionales Elektrodenpaar-Array 11 bilden. Damit wird eine separate Kontaktierung und damit Kapazitätsmessung auf den einzelnen Elektrodenfeldern 11 ermöglicht. Wie Figur 9, kann auch diese Figur als Beispiel für die Sensormatte 1 nach beiden Varianten gesehen werden.

## Patentansprüche

1. Volumenkompressible, kapazitive, flächige, flexible Sensormatte (1) zur Messung von Druck oder Druckverteilungen und/oder zur Messung oder Detektion von Deformationen auf flexiblen flächigen Unterlagen, welche Sensormatte mindestens zwei Elektroden aufweist, zwischen denen die elektrische Kapazität gemessen werden kann, und eine flächige Elastomermatte darstellt, die aus zwei in Richtung senkrecht zu der Sensormatte übereinander angeordneten Elastomerschichten zusammengesetzt ist, dergestalt dass
(i) eine erste Elastomerschicht auf ihrer der zweiten Elastomerschicht zugewandten Flächenseite/Oberfläche ein unebenes Profil mit Erhöhungen und/oder Vertiefungen (4) aufweist, wobei das Profil mit einer lateral dehnbaren Elektrodenschicht bedeckt ist oder die erste Elastomerschicht vollständig elektrisch leitfähig (2) ausgebildet ist, **dadurch gekennzeichnet, dass**
(ii) die zweite Elastomerschicht auf ihrer der ersten Elastomerschicht zugewandten Flächenseite/Oberfläche ein unebenes Profil (2') mit Erhöhungen und/oder Vertiefungen (4') aufweist, das zum Profil der ersten Elastomerschicht teilweise komplementär ist, während ihre andere, von der ersten Elastomerschicht abgewandte Flächenseite/Oberfläche mit einer lateral dehnbaren Elektrodenschicht (3) bedeckt ist, wobei
(iii) in einem entlasteten Zustand der Sensormatte zwischen den Elastomerschichten in den Bereichen zwischen den Erhöhungen und/oder Vertiefungen mindestens ein Hohlraum vorliegt, in den das Elastomermaterial beim Zusammendrücken der Sensormatte ausweichen kann.

2. Sensormatte nach Anspruch 1, wobei die Erhöhungen (4, 4') auf mindestens einer der beiden Elastomerschichten eine Stegform mit einem Aspektverhältnis von Höhe zu Dicke/Breite von mindestens 1 oder eine Säulenform mit einem Aspektverhältnis von Höhe zu Durchmesser/Dicke von mindestens 1 aufweisen.

3. Sensormatte nach Anspruch 2, wobei die Stege oder Säulen sich mit steigendem Abstand von der Elastomerschicht verjüngen.

4. Sensormatte nach einem der Ansprüche 1 bis 3, bei der die Oberflächenprofile der beiden Elastomerschichten periodisch sind, wobei die Periodizität vorzugsweise eindimensional oder zweidimensional ist.

5. Sensormatte nach einem der Ansprüche 1 bis 4, wobei das Hohlraumvolumen mindestens gleich dem Volumen der Erhöhungen ist.

6. Sensormatte nach einem der vorangehenden Ansprüche, die mindestens zwei in verschiedenen Flächensegmenten angeordnete Elektrodenpaare aufweist.

7. Sensormatte nach Anspruch 6, die eine ein- oder zweidimensionale periodische Array-Anordnung von Elektrodenpaaren aufweist.

8. Sensormatte nach einem der vorangehenden Ansprüche, die entlang der Mattenfläche dehnbar ist, wobei die relative laterale Dehnbarkeit lokal oder auf die Gesamtfläche der Matte bezogen insbesondere 1% oder mehr, vorzugsweise 3% oder mehr, besonders bevorzugt 5% oder mehr und ganz besonders bevorzugt 10% oder mehr beträgt.

9. Sensormatte nach einem der vorangehenden Ansprüche, bei der auf mindestens einer Flächenseite der Sensormatte eine elektrisch isolierende Schutzschicht (9) vorgesehen ist, die eine der mindestens zwei Elektroden mechanisch und/oder elektrisch nach außen schützt.

10. Sensormatte nach Anspruch 1 bis 9, bei der die Elektrodenschicht, die sich auf der Außenseite der zweiten Elastomerschicht befindet, aus einer elektrisch leitfähig ausgebildeten porösen Elastomerschicht (7) besteht oder eine solche umfasst.

11. Sensormatte nach einem der Ansprüche 1 bis 10, worin das Profil (4) der ersten Elastomerschicht mit einer lateral dehnbaren Elektrodenschicht bedeckt ist und diese Elektrodenschicht aus einer elektrisch leitfähig ausgebildeten porösen Elastomerschicht besteht oder eine solche umfasst.

12. Sensormatte nach einem der Ansprüche 1 bis 11, worin entweder die erste und/oder die zweite Elastomerschicht porös ist.

13. Aufnahmebehälter für fluide Medien wie Flüssigkeiten, Gase, Pulver, rieselfähige Materialien oder disperse Stoffe oder für nachgiebige Medien wie Gele oder biologische Materialien, der in einer seiner Boden-, Decken- oder Seitenwände eine Sensormatte nach einem der voranstehenden Ansprüche aufweist, dergestalt dass bei der Aufnahme eines fluiden oder nachgiebigen Mediums im Aufnahmebehälter die Sensormatte den vom fluiden oder nachgiebigen Medium ausgeübten Druck messen kann.

14. Verwendung der Sensormatte nach einem der Ansprüche 1 bis 12 als flexibler Drucksensor oder als Sensorarray zur Messung von flächigen Druckverteilungen oder als Deformations- und Verformungssensor beispielsweise auf oder in Sitzen, Betten, Matratzen, Schuhen, Teppichen, Regalen, Vitrinen, Fußböden oder anderen Unterlagen oder als Füllstandssensor, Gasdruck- oder Gasdruckdifferenzsensor oder Auflagedrucksensor für fluide Medien wie Flüssigkeiten, Gase, Pulver, rieselfähige Materialien oder disperse Stoffe oder für nachgiebige Medien wie Gele oder biologische Materialien.

## Claims

1. Volume-compressible capacitative flat flexible sensor mat (1) for measuring pressure or pressure distributions and/or for measuring or detecting deformations on flexible flat supports, wherein the sensor mat comprises at least two electrodes, between which the electrical capacity can be measured, and the sensor mat is a flat elastomer mat composed of two stacked elastomer layers being arranged perpendicularly to the sensor mat, such that
(i) a first elastomer layer comprises an uneven profile having protrusions and/or depressions (4) on the area face/surface facing the second elastomer layer, wherein the profile is covered with a laterally flexible electrode layer or the first elastomer layer is completely formed as an electrically conductive layer (2), **characterized in that**
(ii) the second elastomer layer has an uneven profile (2') which has protrusions and/or depressions (4') on the area face/surface facing the first elastomer layer and which is partly complementary to the profile of the first elastomer layer, whereas its other area face/surface looking away from the first elastomer layer is covered with a laterally flexible electrode layer (3), wherein
(iii) at least one void, into which the elastomer material can evade upon pressing the sensor mat, is present between the elastomer layers in the portions between the protrusions and/or depressions in a relaxed state of the sensor mat.

2. Sensor mat according to claim 1, wherein the protrusions (4, 4') on at least one of the two elastomer layers have a bar shape having an aspect ratio of height to thickness/breadth of at least 1 or a column shape having an aspect ratio of height to diameter/thickness of at least 1.

3. Sensor mat according to claim 2, wherein the bars or columns taper with increasing distance to the elastomer layer.

4. Sensor mat according to any one of claims 1 to 3, wherein the surface profiles of the two elastomer layers are arranged periodically, wherein the periodicity is preferably one-dimensional or two-dimensional.

5. Sensor mat according to any one of claims 1 to 4, wherein the void volume is at least as large as the volume of the protrusions.

6. Sensor mat according to any one of the preceding claims, comprising at least two pairs of electrodes that are arranged in different area segments.

7. Sensor mat according to claim 6, comprising a one-dimensional or two-dimensional periodic array arrangement of pairs of electrodes.

8. Sensor mat according to any one of the preceding claims, which is flexible in the direction of the mat area, wherein the relative lateral flexibility, either local or in relation to the total area of the mat, is particularly 1% or more, preferably 3% or more, more preferably 5% or more and particularly preferably 10% or more.

9. Sensor mat according to any one of the preceding claims, wherein an electrically isolating protection layer (9) is arranged on at least one area surface of the sensor mat, which protection layer outwardly protects one of the at least two electrodes mechanically and/or electrically.

10. Sensor mat according to any one of claims 1 to 9, wherein the electrode layer arranged on the outer surface of the second elastomer layer consists of or comprises an electrically conductive porous elastomer layer (7).

11. Sensor mat according to any one of claims 1 to 10, wherein the profile (4) of the first elastomer layer is covered with a laterally flexible electrode layer and said electrode layer consists of or comprises an electrically conductive porous elastomer layer.

12. Sensor mat according to any one of claims 1 to 11, wherein either the first and/or the second elastomer layer is porous.

13. Container for fluid media such as liquids, gases, powders, flowable materials or dispersed substances or for soft media such as gels or biological materials, wherein the container has a sensor mat according to any one of the preceding claims in one of its bottom, ceiling or side walls such that the sensor mat can measure the pressure applied by a fluid or soft medium upon reception of the fluid or soft medium by the container.

14. Use of the sensor mat according to any one of claims 1 to 12 as a flexible pressure sensor or as a sensor array for measuring areal pressure distributions or as sensor for deformations for instance on or in seats, beds, matresses, shoes, carpets, shelves, showcases, floorings or other bases or as level sensor, gas pressure sensor or gas pressure difference sensor or contact pressure sensor for fluid media such as liquids, gases, powders, flowable materials or dispersed substances or for soft media such as gels or biological materials.

## Revendications

1. Tapis de capteurs (1) à volume compressible, capacitif, plat, flexible pour la mesure de pression ou de répartitions de pression et/ou pour la mesure ou la détection de déformations sur des supports flexibles plats, lequel tapis de capteurs comporte au moins deux électrodes, entre lesquelles la capacité électrique peut être mesurée, et comprend un tapis élastomère plat, qui est composé de deux couches d'élastomère disposées l'une au-dessus de l'autre dans une direction perpendiculaire au tapis de capteurs, de sorte que
(i) une première couche d'élastomère présente sur sa face/surface tournée vers la deuxième couche d'élastomère un profil inégal avec des protubérances et/ou des creux (4), dans lequel le profil est recouvert par une couche d'électrode extensible latéralement ou la première couche d'élastomère est entièrement conductrice de l'électricité (2), **caractérisé en ce que**
(ii) la deuxième couche d'élastomère présente sur sa face/surface tournée vers la première couche d'élastomère un profil inégal (2') avec des protubérances et/ou des creux (4'), qui est en partie complémentaire au profil de la première couche d'élastomère, tandis que son autre face/surface, située à l'opposé de la première couche d'élastomère, est recouverte par une couche d'électrode extensible latéralement (3), dans lequel
(iii) dans un état déchargé du tapis de capteurs, il se trouve entre les couches d'élastomère dans les régions situées entre les protubérances et/ou les creux au moins une cavité, dans laquelle le matériau élastomère peut se répandre lors de la compression du tapis de capteurs.

2. Tapis de capteurs selon la revendication 1, dans lequel les protubérances (4, 4') sur au moins une des deux couches d'élastomère présentent une forme de nervure avec un rapport de forme de la hauteur à l'épaisseur/largeur d'au moins 1 ou une forme de colonne avec un rapport de forme de la hauteur au diamètre/épaisseur d'au moins 1.

3. Tapis de capteurs selon la revendication 2, dans lequel les nervures ou les colonnes s'amincissent à mesure que la distance à la couche d'élastomère augmente.

4. Tapis de capteurs selon l'une quelconque des revendications 1 à 3, dans lequel les surfaces/profils des deux couches d'élastomère sont périodiques, dans lequel la périodicité est de préférence unidimensionnelle ou bidimensionnelle.

5. Tapis de capteurs selon l'une quelconque des revendications 1 à 4, dans lequel le volume de la cavité est au moins égal au volume des protubérances.

6. Tapis de capteurs selon l'une quelconque des revendications précédentes, qui présente au moins deux paires d'électrodes disposées dans différents segments de la surface.

7. Tapis de capteurs selon la revendication 6, qui présente un arrangement de réseau périodique unidimensionnel ou bidimensionnel de paires d'électrodes.

8. Tapis de capteurs selon l'une quelconque des revendications précédentes, qui est extensible le long de la face du tapis, dans lequel l'extensibilité latérale relative vaut localement ou rapportée à la surface totale du tapis en particulier 1 % ou plus, de préférence 3 % ou plus, de préférence encore 5 % ou plus, et de préférence particulière encore 10 % ou plus.

9. Tapis de capteurs selon l'une quelconque des revendications précédentes, dans lequel il est prévu sur au moins une face du tapis de capteurs une couche de protection électriquement isolante (9), qui protège une desdites au moins deux électrodes mécaniquement et/ou électriquement vis-à-vis de l'extérieur.

10. Tapis de capteurs selon l'une des revendications 1 à 9, dans lequel la couche d'électrode, qui se trouve sur le côté extérieur de la deuxième couche d'élastomère, se compose d'une couche d'élastomère poreuse électriquement conductrice (7) ou en comprend une.

11. Tapis de capteurs selon l'une quelconque des revendications 1 à 10, dans lequel le profil (4) de la première couche d'élastomère est recouvert par une couche d'électrode latéralement extensible et cette couche d'électrode se compose d'une couche d'élastomère poreuse conductrice de l'électricité ou en contient une.

12. Tapis de capteurs selon l'une des revendications 1 à 11, dans lequel soit la première et/ou la deuxième couche d'élastomère est poreuse.

13. Récipient de réception pour des milieux fluides comme des liquides, des gaz, de la poudre, des matériaux coulants ou des substances dispersées ou pour des milieux souples comme des gels ou des matériaux biologiques, qui présente dans une de ses parois de fond, de couvercle ou latérales, un tapis de capteurs selon l'une quelconque des revendications précédentes, de telle manière que lors de la réception d'un milieu fluide ou souple dans le récipient de réception le tapis de capteurs puisse mesurer la pression exercée par le milieu fluide ou souple.

14. Utilisation du tapis de capteurs selon l'une quelconque des revendications 1 à 12 sous forme de capteur de pression ou de réseau de capteurs pour la mesure de répartitions de pression plates ou comme capteur de déformations et de changements de forme par exemple sur ou dans des sièges, des lits, des matelas, des chaussures, des tapis, des rayonnages, des vitrines, des planchers ou autres supports ou comme capteur de niveau de remplissage, capteur de pression gazeuse ou de différence de pression gazeuse ou comme capteur de pression d'appui pour des milieux fluides comme des liquides, des gaz, des poudres, des matériaux coulants ou des substances dispersées ou pour des milieux souples comme des gels ou des matériaux biologiques.
